# EUROPEAN PATENT SPECIFICATION

(11) **EP 1 359 454 B1**
(45) Date of publication and mention of the grant of the patent: **22.12.2010**
(21) Application number: 01273675.7
(22) Date of filing: 05.02.2001
(51) Int. Cl.: G02B 21/36, H04N 5/225

(54) **ADAPTER SYSTEM AND IMAGING SYSTEM**
ADAPTERSYSTEM UND ABBILDUNGSSYSTEM
SYSTEME ADAPTATEUR ET SYSTEME D'IMAGERIE

(43) Date of publication of application: 05.11.2003
(73) Proprietor: Yoshimine, Takashi, Toda-shi, Saitama 335-0025 (JP)
(72) Inventor: NOMURA, Masaru, Komazawa, Setagaya-ku, Tokyo 154-0012 (JP)
(74) Representative: Waldren, Robin Michael
(86) International application number: PCT/JP2001/000802
(87) International publication number: WO 2002/063369

(56) References cited:
- DE-U1- 29 722 332
- GB-A- 2 300 681
- JP-A- 8 021 959
- JP-A- 63 271 215
- JP-U- 3 022 046
- JP-U- 3 068 547
- JP-U- 3 073 998
- US-A- 3 639 761
- US-A- 4 172 662
- US-A- 4 684 500
- US-A- 6 147 797
- PATENT ABSTRACTS OF JAPAN vol. 1996, no. 05, 31 May 1996 (1996-05-31) -& JP 08 021959 A (KANTO KOKI:KK), 23 January 1996 (1996-01-23)
- PATENT ABSTRACTS OF JAPAN vol. 013, no. 089 (P-836), 2 March 1989 (1989-03-02) -& JP 63 271215 A (KITASATO SUPPLY:KK), 9 November 1988 (1988-11-09)

## Description

The present invention relates to an adapter system for applying, for example a digital camera to a microscope.

The recent widespread use of digital cameras is remarkable, and the digital camera is by no means inferior to conventional silver cameras in terms of functions, price, and the like. Hitherto, a magnified image has been picked up by attaching such a digital camera to a microscope, in which case the digital camera is attached to a C-mount section provided at a position different from that of an ocular section of the microscope.

The microscope having the C-mount section, however, is very special and expensive. Hence, in spite of the recent situation in which digital cameras have come into wide use, it is extremely difficult to obtain a magnified image through the microscope as a digital image.

JP08-021959, over which the independent claims are characterised discloses a magnifying device for attaching between a microscope and a digital camera comprises a means for attaching to the microscope and a means for attaching the digital camera to the magnifying device. A lens frame comprising a lens screw is movably disposed inside a tubular portion of the magnifying device.

JP 3 073 998 U and JP 63 271 215 disclose further attachment devices for attaching a digital camera to a microscope.

An object of the present invention is to provide an adapter system capable of easily picking up a magnified image through a microscope by using an image pick-up apparatus such as a digital camera or the like.

According to the present invention there is provided an adapter system as claimed in claim1.

The adapter system comprises a first adapter including a main body, a first end of which is inserted into an ocular inserting portion of a microscope and held engagingly in a predetermined position and to the second end of which an image pick-up apparatus is allowed tog be attached, having a first optical path therein, and a first lens system which is disposed in the first optical path inside the main body and which allows an image through the ocular inserting portion to be formed at a specified position of the image pick-up apparatus attached to the main body while the main body is inserted into the ocular inserting portion of the microscope and held engagingly in the predetermined position. The system further comprises a second adapter, a first end of which is engaged with a C-mount section of the microscope and into the second end of which the first end of the first adapter is inserted and held engagingly in a predetermined position, having therein a second optical path with a second optical path length which allows an image to be formed through the C-mount section of the microscope at the specified position of the image pick-up apparatus attached to the first adapter while the first end of the first adapter is inserted into the second end and locked in the predetermined position.

According to the present invention, the image pick-up apparatus such as the digital camera or the like can be attached not only to the C-mount section of the microscope, but also to the ocular section side of the microscope, whereby the magnified image through the microscope can be easily picked up be using the image pick-up apparatus such as the digital camera or the like. Furthermore, a state in which the image pick-up apparatus such as the digital camera or the like is attached to the C-mount section of the microscope and a state in which an ocular is attached to the ocular section of the microscope are optically conditioned identically, and thus an image seen under the microscope through the ocular and an image picked up by the image pick-up apparatus accord optically. Accordingly, it becomes possible to pick up an image by the use of the image pick-up apparatus while looking at the image under the microscope through the ocular.
FIG. 1 is a sectional view showing the structure of an optical adapter in an adapter system according to an embodiment of the present invention;
FIG. 2 is a sectional view showing the configuration of 30 adaptor in the adaptor system according to the embodiment of the present invention.
FIG. 3 is a sectional view showing a configuration of a C-mount adapter related to an embodiment of the present invention.
FIG. 4 is a sectional view showing the state when 30 adaptor shown in FIG. 2 is attached to the optical adapter shown in FIG. 1.
FIG. 5 is a sectional view showing the state when 30 adaptor shown in FIG. 2 and a C-mount adapter shown in FIG. 3 are attached to the optical adapter shown in FIG. 1.
FIG. 6 is a diagram for explaining an example (the first example) of the use of the adapter system according to the embodiment of the present invention;
FIG. 7 is a diagram for explaining an example (the second example) of the use of the adapter system according to the embodiment of the present invention;
FIG. 8 is a diagram showing another example of a rotation stopping portion according to the present invention;
FIG. 9 is a view showing still another example of the rotation stopping portion according to the present invention;
FIG. 10 is a sectional view showing the structure of an image pick-up system according to a comparative example.

Preferred embodiments of the present invention will be described below based on the drawings.

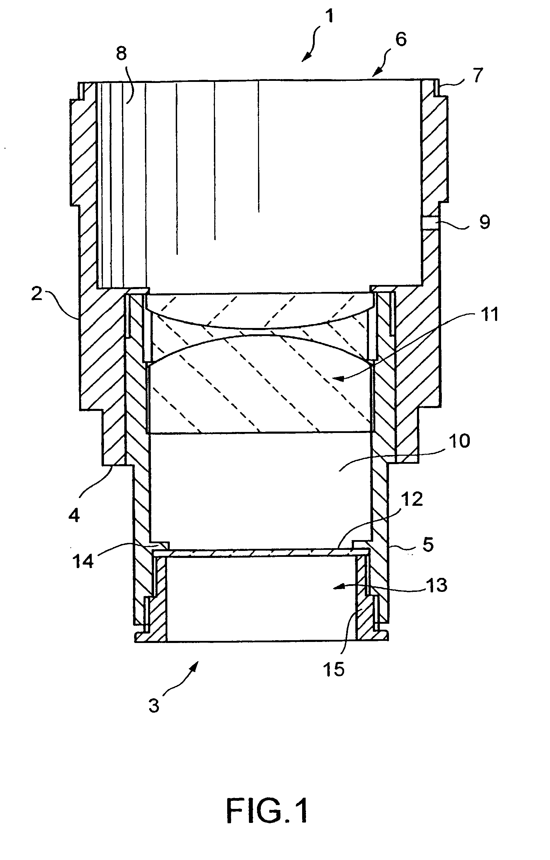

As shown in FIG. 1, a main body 2 of an optical adapter 1 has a stepped cylindrical shape. A first end 3 of the main body 2 is inserted into an ocular inserting portion of a microscope, and an engaging portion 4 having a diameter slightly larger than that of the first end 3 is held engagingly at an inlet of the ocular inserting portion, whereby the first end 3 of the main body 2 is inserted into the ocular inserting portion of the microscope and held engagingly in a predetermined position. The surface of a contact portion 5, which is an outer peripheral portion of the main body 2 and comes in contact with the ocular inserting portion of the microscope, is made rougher than the surfaces of other portions to function as a rotation stopping portion for preventing the rotation of the optical adapter inserted into the ocular inserting portion of the microscope. In the present invention, a digital camera, for example, is inserted into the ocular inserting portion of the microscope with the optical adapter 1 between them, in which case the digital camera is prone to rotate unexpectedly since the digital camera and the optical adapter are mounted in an oblique direction as will be described later. The provision of the aforesaid rotation stopping portion can prevent such rotation by simple structure.

The digital camera or a CCD camera as an image pick-up apparatus can be attached to a second end 6 of the main body 2. A screwing portion 7 at which a lens section of the digital camera is screwed down is provided at an outer peripheral portion of the second end 6 of the main body 2. A clearance is provided at the end of a screw thread of the screwing portion 7, and thereby the attached digital camera can easily be detached. Moreover, an inserting portion 8 into which a lens section of the CCD camera is inserted is provided in an inner peripheral portion of the second end 6 of the main body 2. The digital camera and the CCD camera are set to have such optical path lengths those optical images from the microscope accord when they are attached to the microscope with the optical adapter 1 between them. A threaded hole 9 in which a screw for fixing the CCD camera inserted into the inserting portion 8 is driven is provided in the main body 2. The CCD camera is commonly wired from a personal computer or the like, but fixing of the CCD camera with a screw through the threaded hole 9 can prevent the CCD camera from rotating unexpectedly by being pulled by wires or the like.

An optical path 10 for letting an optical image from the microscope pass is provided inside the main body 2. Provided in the optical path 10 of the main body 2 is a lens system 11 which allows an image through the ocular inserting portion of the microscope to be formed at a specific position of the digital camera or the CCD camera attached to the main body 2 while the main body 2 is inserted into the ocular inserting portion of the microscope and held engagingly in the predetermined position.

A dimension measuring glass mounting portion 13 to/from which a dimension measuring glass 12 can be attached and detached is provided at a focal position in the optical path 10 in the main body 2. The dimension measuring glass mounting portion 13 is structured so that the dimension measuring glass 12 is inserted from the first end 3 side of the main body 2, fixed at a protruding portion 14 provided on the inner wall on the first end 3 side of the main body 2, and sandwiched between a ring member 15 screwed to the inner periphery on the first end 3 side of the main body 2 and the protruding portion 14. In the optical adapter according to the present invention, the aforesaid dimension measuring glass mounting section 13 can be provided specially in the optical path 10, whereby it becomes possible that various images such as a dimension line and the like are superimposed on an image via the microscope by providing the dimension measuring glass mounting portion 13 structured as above to/from which the dimension measuring glass 12 is attachable and detachable.

It should be mentioned that the inside diameter of the ocular inserting portion of a microscope has two standard sizes, namely, 23.2 mm and 30 mm. Thus, the outside diameter of the contact portion 5 of the main body 2 of the optical adapter 1 is 23.2 mm, and an adapter 91 with an outside diameter of 30 mm is allowed to be attached to the outer periphery of the contact portion 5, which makes it possible to cope with the both sizes.

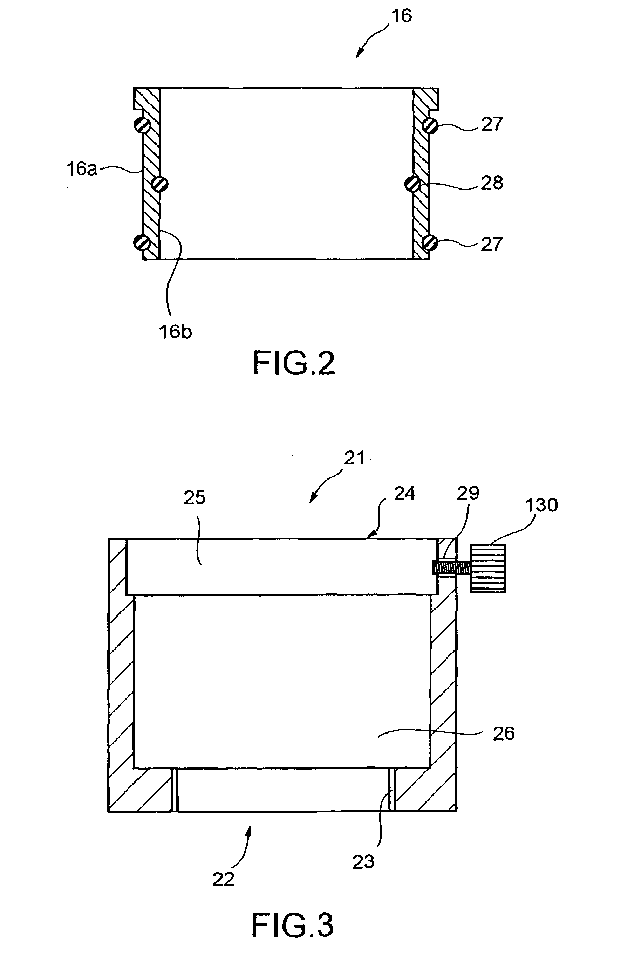

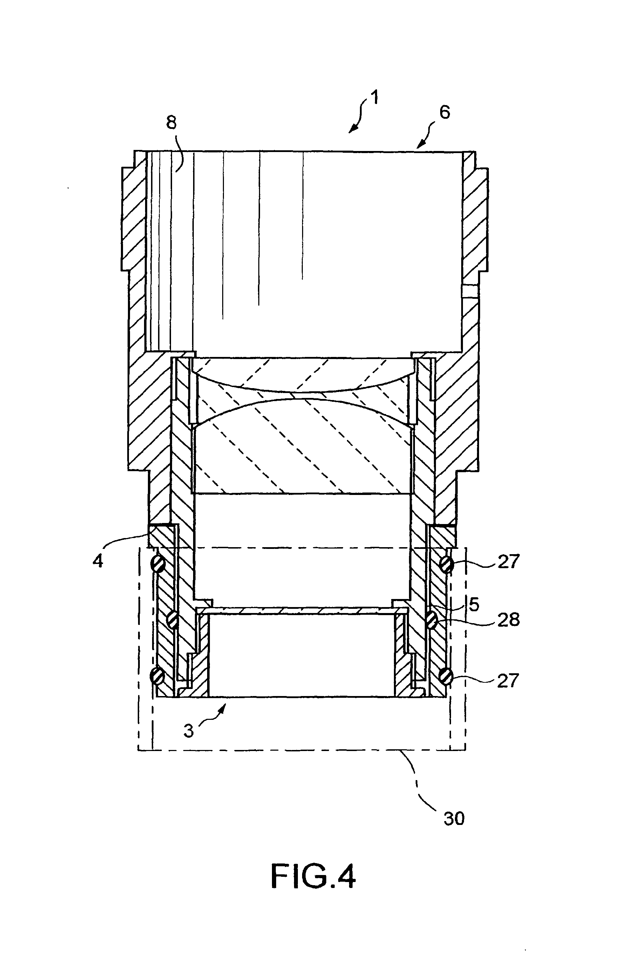

In addition, by using optical adapter 1 in a manner shown in FIG. 1, a digital camera and the like can be attached to a microscope having an ocular inserting portion of inside diameter 23.2, and, as shown in FIG. 4, 30 adaptor in FIG. 2 is attached to the optical adapter 1 in FIG. 1 and a digital camera can be installed on a microscope having an ocular inserting portion of the inside diameter 30.

Next, as referred in FIG.2, one O-ring 28 is attached to the inner periphery side 16b as a rotation stopping portion of the second cylindrical adaptor 16, and two O-rings 27 are attached to the outer periphery side 16a. The provision of such rotation stopping portion can prevent rotation such as described above.

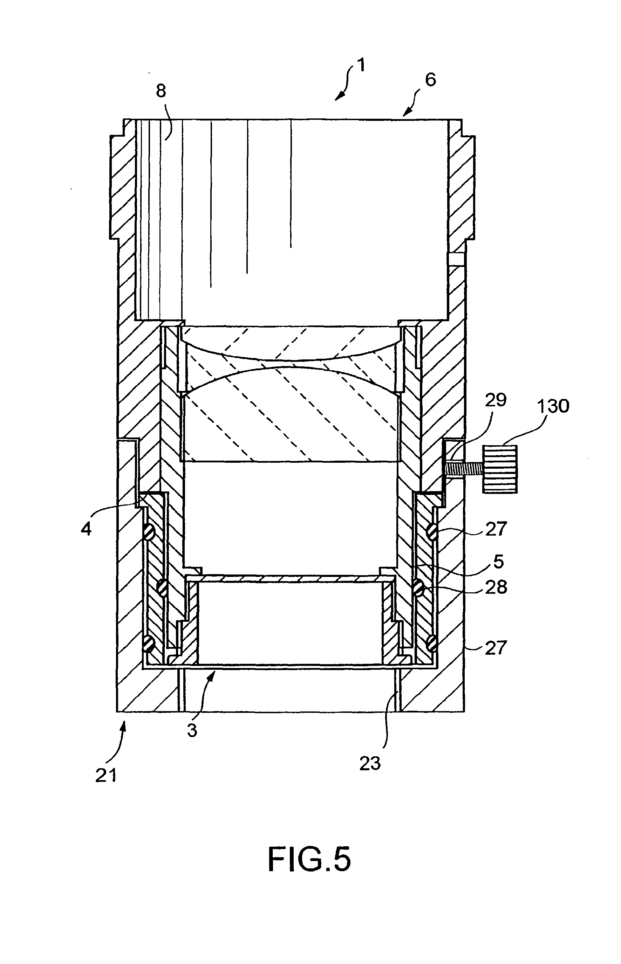

As shown in FIG.3, a C-mount adapter 21 has a cylindrical shape. A threaded hole 29 is provided to the side of the inserting portion 25 of the second end 24 side and a screw 130 is attached to the main body 2 of optical adapter 1 mentioned above. In other words, optical path 26 having an optical path length which allows an image to be formed at the aforesaid specific position of a digital camera and the CCD camera attached to the optical adapter 1 through the C-mount section of the microscope is provided inside the C-mount adapter 21, while the first end 3 of the optical adapter 1 is inserted into the inserting portion 25 of the second end 24 through 30 adaptor 16 as shown in FIG. 5 and locked in a predetermined position. In this manner, by using screw 130, rotation of the main body 2 and the image pick-up apparatus of a digital camera and the like can be prevented while they are attached to the C-mount section of the microscope.

The adapter system according to the embodiment of the present invention is structured as above, and can be used, for example, as follows.

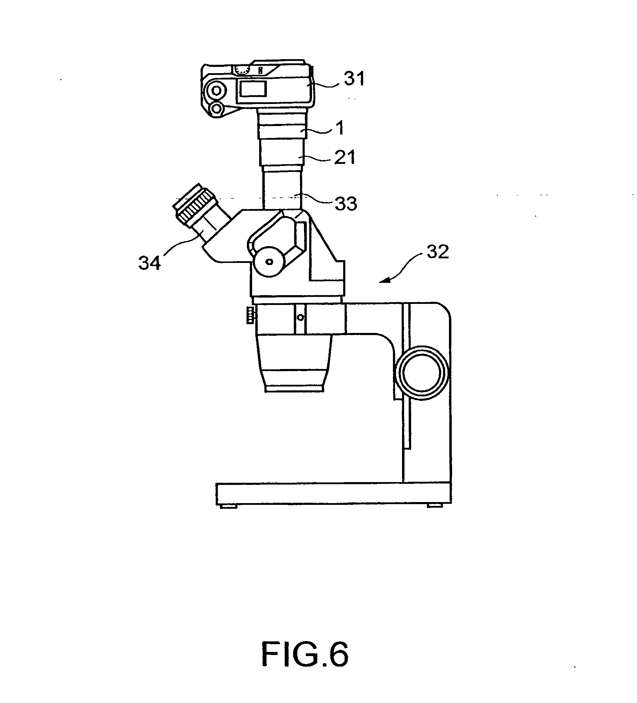

When a digital camera 31 is used on the side of a C-mount section 33 of a microscope 32, for example, as shown in FIG. 6, the digital camera 31 is attached to the C-mount section 33 of the microscope 32 with the C-mount adapter 21 and the optical adapter 1 between them. The CCD camera can also be attached in the same manner as above. In these cases, an user can confirm an image optically identical with an image picked up by the digital camera 31 from an ocular section 34 of the microscope 32.

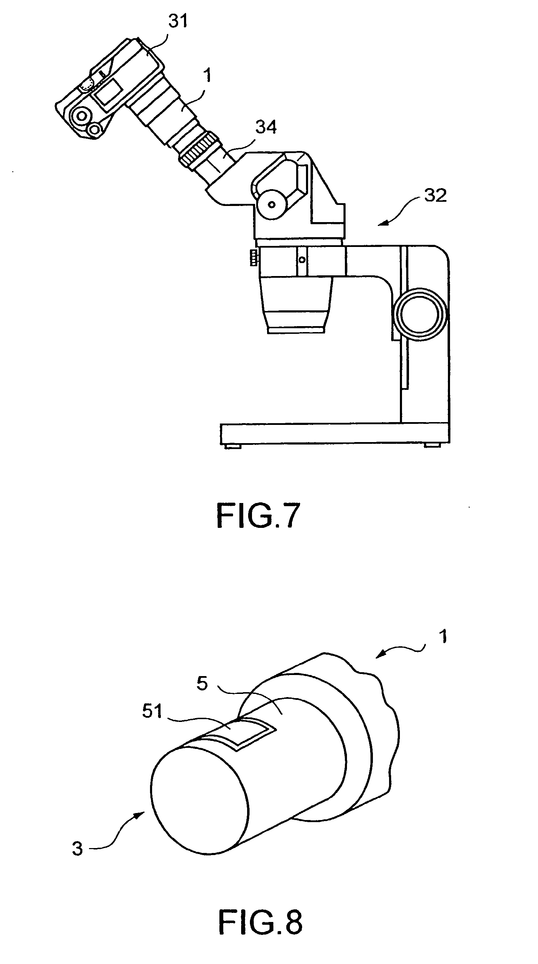

When the digital camera 31 is used on the ocular section 34 side of the microscope 32 as shown in FIG. 7, the digital camera 31 is attached to the ocular section 34 of the microscope 32 with the optical adapter 1 between them. The CCD camera can also be attached in the same manner as above. Thus, the digital camera can also be used for a common microscope with no C-mount section.

It should be mentioned that the aforesaid rotation stopping portion may be structured so that a tape 51 is stuck on the contact portion 5 which is the outer peripheral portion of the main body 2 of the optical adapter 1 and comes in contact with the ocular inserting portion of the microscope as shown in FIG. 8. It is more effective to stick the tape 51 on the upper side of the contact portion 5.

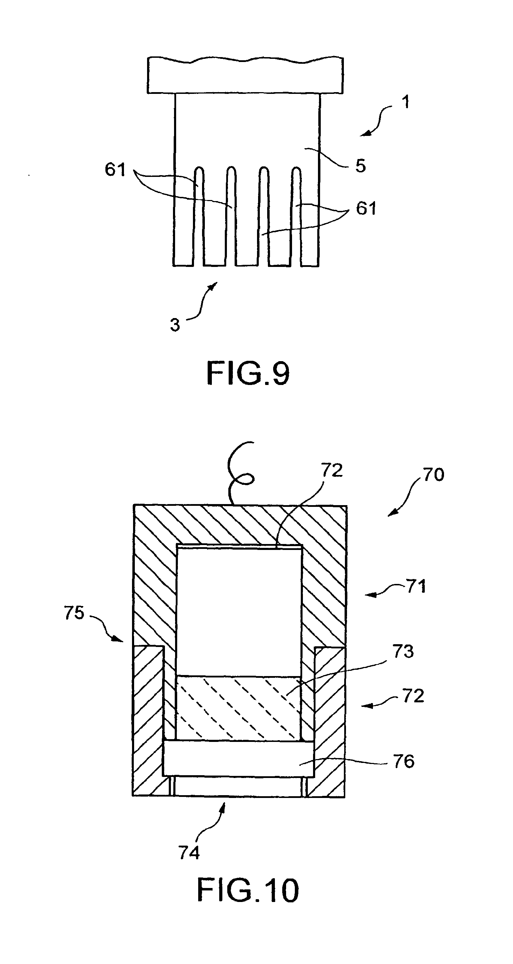

Moreover, the rotation stopping portion may be a plurality of slots 61 which are formed in the contact section 5 of the main body 2 of the optical adapter 1 in the direction of insertion into the ocular inserting portion of the microscope as shown in FIG.9. The formation of these slots 61 makes it possible to give elastic force to the ocular inserting portion side of the microscope, thereby producing effect on prevention of rotation.

Next, a comparative example will be explained.

As shown in FIG. 10, an image pick-up system 70 according to this example is composed of a CMOS camera 71 and an adapter 72.

In the CMOS camera 71, a CMOS sensor 77 is placed at a position where an image through the ocular inserting portion of the microscope is formed while the CMOS camera 71 is inserted into the ocular inserting portion of the microscope and held engagingly in a predetermined position. Incidentally, the numeral 73 denotes a lens system.

In the adapter 72, a first end 74 thereof is engaged with the C-mount section of the microscope, and the CMOS camera 71 is inserted into a second end 75 thereof and held engagingly in a predetermined position, and provided therein is an optical path 76 with an optical path length which allows an image to be formed through the C-mount section of the microscope on the CMOS sensor 77 placed in the CMOS camera 71 while the CMOS camera 71 is inserted into the second end 75 and held engagingly in the predetermined position.

In the image pick-up system according to the example , the CMOS camera 71 can be used at both of the C-mount section and the ocular section of the microscope.

As explained above, according to the present invention, a magnified image via a microscope can be picked up easily by using an image pick-up apparatus such as a digital camera or the like.

## Claims

1. An adapter system for use with a microscope having an ocular inserting portion (34) and a C-mount section (33), the adapter system comprising:
a first adapter (1) including:
a main body (2), having a first end with an outer diameter corresponding to a first standard size of inside diameter of 23.2mm microscope ocular insertion portion (3) for insertion into the ocular inserting portion (34) of a microscope (32) and for being engagingly held in a predetermined position therein and a second end (6) for attachment to an image pick-up apparatus (31, 71), the main body (2) having a first optical path (10) therein; and
a lens system (11) which is disposed in the first optical path (10) inside the main body (2) and which allows an image from the microscope (32) to be formed at a specified position beyond the first adapter (1) while the main body (2) is inserted into the ocular inserting portion (34) of the microscope (32) and held engagingly in the predetermined position;
**CHARACTERISED BY**:
a further adapter (16) arranged to fit over the first end (3) of the main body (2) and having an outer diameter corresponding to a second standard size of inside diameter of 30mm microscope ocular insertion portion;
a second adapter (21), having a first end (22) for engagement with the C-mount section (33) of the microscope (32) and a second end (24) arranged so that the first end (3) of the first adapter (1) with the further adapter (16) attached to it can be inserted and held engagingly in a predetermined position;
the second adapter (21) having therein a second optical path (26) with a second optical path length which allows an image to be formed through the C-mount section (33) of the microscope (32) at the specified position when attached to the first adapter (1) while the first end (3) of the first adapter (1) with the further adapter (16) attached thereto is inserted into the second end of the second adapter (21) and held engagingly in the predetermined position and when the first end (22) of the second adapter (21) is engaged with the C-mount section (33) of the microscope (32).

2. The system as set forth in claim 1, wherein the further adapter (16) has a first O-ring (27) attached to an outer periphery (16a) of the further adapter (16) and a second O-ring (28) attached between an inner periphery (16b) of the further adapter (16) and the first end (3) of the main body (2) of the first adapter (1).

3. The system as set forth in claim 1or 2, further comprising a dimension measuring glass mounting section (13) to and from which a dimension measuring glass (12) is allowed to be attached and detached, and provided at a focal position of the first optical path (10) inside the main body (2) of the first adapter (1).

4. The system as set forth in claim 1, 2 or 3, further comprising an image pickup apparatus (31, 71) attached to the second end of the main body (2);
wherein the image pick-up apparatus (31, 71) is a digital camera (31) or a CCD camera (71), and;
the first adapter (1) further comprising at the second end (6) of the main body (2):
a screwing portion (7) to which a lens section of the digital camera (31) is screwably attachable and an inserting portion (8) into which a lens section of the CCD camera (71) is insertable; and
a threaded hole (9) provided in the main body (2) for insertion of a screw for engaging the CCD camera (71).

5. The system as set forth in claim 1, further comprising a rotation stopping portion for preventing the rotation of the first adapter (1) when inserted in the ocular inserting portion (34), the rotation stopping portion provided in at least one part of a contact portion (5) in which the main body (2) contacts the ocular inserting portion (34) of the microscope (32).

6. The system as set forth in claim 5, wherein the rotation stopping portion is formed by making a surface of at least one part of the contact portion (5) rougher than the surfaces of other portions.

7. The system as set forth in claim 5, wherein the rotation stopping portion is a tape (51) stuck on at least one part of the contact portion (5).

8. The system as set forth in claim 5, wherein the rotation stopping portion is a plurality of slots (61) provided in a direction of insertion into the ocular inserting portion (34).

9. The system as set forth in any preceding claim, further comprising the microscope (32).

## Patentansprüche

1. Adaptersystem zur Verwendung mit einem Mikroskop, das ein Okular-Steckaufuahmeteil (34) und einen C-Fassungsabschnitt (33) hat, wobei das Adaptersystem umfasst:
einen ersten Adapter (1), Folgendes enthaltend:
einen Hauptkörper (2), der ein erstes Ende hat mit einem einer ersten Standardgröße von Innendurchmesser von 23,2 mm entsprechenden Außendurchmesser für ein Mikroskop-Okular-Einsteckteil (3), das in das Okular-Steckaufnahmeteil (34) eines Mikroskops (32) gesteckt wird und darin in einer vorbestimmten Position in Eingriff gehalten wird, und ein zweites Ende (6) zum Befestigen an eine Bildaufnahmevorrichtung (31, 71), wobei der Hauptkörper (2) darin einen ersten optischen Pfad (10) hat; und
ein Linsensystem (11), das im ersten optischen Pfad (10) innerhalb des Hauptkörpers (2) angeordnet ist und das ermöglicht, dass ein Bild vom Mikroskop (32) an einer spezifischen über den ersten Adapter (1) hinausgehenden Position geformt wird, während der Hauptkörper (2) in das Okulaz-Steckaufnahmeteil (34) des Mikroskops (32) gesteckt wird und in der vorbestimmten Position in Eingriff gehalten wird;
**gekennzeichnet durch**:
einen weiteren Adapter (16), dazu angeordnet, über das erste Ende (3) des Hauptkörpers (2) zu pasten, und mit einem einer zweiten Standardgröße des Innendurchmessers von 30 mm entsprechenden Außendurchmesser für das Mikroskop-Okulareinsteckteil;
einen zweiten Adapter (21) mit einem ersten Ende (22) zum Eingriff mit dem C-Fassungsabschnitt (33) des Mikroskops (32) und einem zweiten Ende (24), das so angeordnet ist, dass das erste Ende (3) des ersten Adapters (1) mit dem an ihm befestigten weiteren Adapter (16) in eine vorbestimmte Position gesteckt und in Eingriff gehalten werden kann;
wobei der zweite Adapter (21) darin einen zweiten optischen Pfad (26) hat mit einer zweiten optischen Pfadlänge, die ermöglicht, dass ein Bild **durch** den C-Fassungsabschnitt (33) des Mikroskops (32) an der spezifizierten Position geformt werden kann, wenn am ersten Adapter (1) befestigt, während das erste Ende (3) der ersten Adapters (1) mit dem weiteren daran befestigten Adapter (16) in das zweite Ende des zweiten Adapters (21) gesteckt wird und in der vorbestimmten Position in Eingriff gehalten wird, und wenn das erste Ende (22) des zweiten Adapters (21) mit dem C-Fassungsabschnitt (33) des Mikroskops (32) in Eingriff gebracht wird.

2. System nach Anspruch 1, worin der weitere Adapter (16) einen ersten O-Ring (27) hat, der an einer Außenperipherie (16a) des weiteren Adapters (16) befestigt ist, und einen zweiten O-ring (28), der zwischen einer Innenperipherie (16b) des weiteren Adapters (16) und dem ersten Ende (3) der Hauptkörpers (2) des ersten Adapters (1) befestigt ist.

3. System nach Anspruch 1 oder 2, außerdem einen Dimensionsmessglas-Montageabschnitt (13) umfassend, an den ein Dimensionsmessglas (12) befestigt werden kann und von dem es abgenommen werden kann, und an einem Fokuspunkt des ersten optischen Pfads (10) innerhalb des Hauptkörpers (2) des ersten Adapters (1) bereitgestellt.

4. System nach Anspruch 1, 2 oder 3, außerdem eine Bildaufnahmevorrichtung (31, 71) umfassend, die am zweiten Ende des Hauptkörpers (2) befestigt ist;
worin die Bildaufnahmevorrichtung (31, 71) eine Digitalkamera (31) oder eine CCD-Kamera (71) ist, und
der erste Adapter (1) außerdem am zweiten Ende (6) des Hauptkörpers (2) Folgendes umfasst:
ein Schraubteil (7), an das ein Linsenabschnitt der Digitalkamera (31) schraubbar befestigt werden kann, und ein Steckaufnahmeteil (8), in das ein Linsenabschnitt der CCD-Kamera (71) einsteckbar ist; und
ein Gewindeloch (9), das im Hauptkörper (2) zum Einführen einer Schraube bereitgestellt ist, um die CCD-Kamera (71) in Eingriff zu bringen.

5. System nach Anspruch 1, außerdem ein Drehstoppteil umfassend, um die Drehung des ersten Adapters (1) zu verhindern, wenn er in das Okular-Steckaufnahmeteil (34) gesteckt wird, wobei das Drehstoppteil in mindestens einem Stück eines Kontaktteils (5) bereitgestellt ist, in dem der Hauptkörper (2) mit dem Okular-Steckaufnahmeteil (34) des Mikroskops (32) in Kontakt ist.

6. System nach Anspruch 5, worin das Drehstoppteil **dadurch** geformt wird, dass eine Oberfläche von mindestens einem Stück des Kontaktteils (5) rauer gemacht wird als die Oberflächen anderer Teile.

7. System nach Anspruch 5, worin das Drehstoppteil ein Band (51) ist, das auf mindestens einem Stück des Kontaktteils (5) festgemacht wird.

8. System nach Anspruch 5, worin das Drehstoppteil eine Vielzahl von Schlitzen (61) ist, die in einer Einsteckrichtung in das Okular-Steckaufnahmeteil (34) bereitgestellt sind.

9. System nach einem vorhergehenden Anspruch, außerdem das Mikroskop (32) umfassend.

## Revendications

1. Système adaptateur destiné à être utilisé avec un microscope présentant une partie d'insertion oculaire (34) et une section de support de fixation en C (33), le système adaptateur comprenant :
un premier adaptateur (1) comportant :
un corps principal (2), présentant une première extrémité dotée d'un diamètre extérieur correspondant à une première taille standard de diamètre intérieur de partie d'insertion oculaire de microscope (3) de 23,2 mm destinée à être insérée dans la partie d'insertion oculaire (34) d'un microscope (32) et à y être maintenue de manière fixe dans une position prédéterminée, et une seconde extrémité (6) destinée à être fixée à un dispositif de prise d'images (31, 71), le corps principal (2) ayant un premier chemin optique (10), et
un système de lentille (11) agencé dans le premier chemin optique (10) à l'intérieur du corps principal (2) et qui autorise la formation d'une image du microscope (32) à une position spécifiée au-delà du premier adaptateur (1) tandis que le corps principal (2) est inséré dans la partie d'insertion oculaire (34) du microscope (32) et maintenu de manière fixe dans la position prédéterminée ;
**caractérisé par** :
un adaptateur supplémentaire (16) agencé de manière à s'adapter sur la première extrémité (3) du corps principal (2) et présentant un diamètre extérieur correspondant à une seconde taille standard d'un diamètre intérieur d'une partie d'insertion oculaire de microscope de 30 mm ;
un second adaptateur (21), présentant une première extrémité (22) destinée à être mise en prise avec la section de support de fixation en C (33) du microscope (32) et une seconde extrémité (24) agencée de sorte que la première extrémité (3) du premier adaptateur (1) à laquelle l'adaptateur supplémentaire (16) est fixé peut être insérée et maintenue fixe dans une position prédéterminée ;
le second adaptateur (21) présentant un second chemin optique (26) avec une seconde longueur de chemin optique permettant la formation d'une image via la section de support de fixation en C (33) du microscope (32) à la position spécifiée lorsqu'il est fixé au premier adaptateur (1), tandis que la première extrémité (3) du premier adaptateur (1) à laquelle l'adaptateur supplémentaire (16) est fixé est insérée dans la seconde extrémité du second adaptateur (21) et maintenue fixe dans la position prédéterminée, et lorsque la première extrémité (22) du second adaptateur (21) est mise en prise avec la section de support de fixation en C (33) du microscope (32).

2. Système selon la revendication 1, dans lequel l'adaptateur supplémentaire (16) présente un premier joint torique (27) fixé à une périphérie extérieure (16a) de l'adaptateur supplémentaire (16) et un second joint torique (28) fixé entre une périphérie intérieure (16b) de l'adaptateur supplémentaire (16) et la première extrémité (3) du corps principal (2) du premier adaptateur (1).

3. Système selon la revendication 1 ou 2, comprenant en outre une section de fixation de verre de mesure de dimension (13), vers et à partir de laquelle un verre de mesure de dimension (12) peut être fixé et démonté, et délivrée à une position focale du premier chemin optique (10) à l'intérieur du corps principal (2) du premier adaptateur (1).

4. Système selon la revendication 1, 2 ou 3, comprenant en outre un dispositif de prise d'images (31, 71) fixé à la seconde extrémité du corps principal (2) ;
dans lequel le dispositif de prise d'images (31, 71) est une caméra numérique (31) ou une caméra CCD (71), et;
le premier adaptateur (1) comprenant en outre, au niveau de la seconde extrémité (6) du corps principal (2) :
une partie de vissage (7) à laquelle une section de lentille de la caméra numérique (31) peut être fixée par vissage et une partie d'insertion (8) dans laquelle une section de lentille de la caméra CCD (71) peut être insérée ; et
un orifice taraudé (9) délivré dans le corps principal (2) pour l'insertion d'une vis en vue d'une mise en prise de la caméra CCD (71).

5. Système selon la revendication 1, comprenant en outre une partie d'arrêt de rotation pour empêcher la rotation du premier adaptateur (1) lorsqu'il est inséré dans la partie d'insertion oculaire (34), la partie d'arrêt de rotation étant délivrée dans au moins une partie d'une partie de contact (5) dans laquelle le corps principal (2) est en contact avec la partie d'insertion oculaire (34) du microscope (32).

6. Système selon la revendication 5, dans lequel la partie d'arrêt de rotation est formée en réalisant une surface d'au moins une partie de la partie de contact (5) plus rugueuse que les surfaces des autres parties.

7. Système selon la revendication 5, dans lequel la partie d'arrêt de rotation est un ruban (51) collé sur au moins une partie de la partie de contact (5).

8. Système selon la revendication 5, dans lequel la partie d'arrêt de rotation représente une pluralité de fentes (61) délivrées dans une direction d'insertion dans la partie d'insertion oculaire (34).

9. Système selon l'une quelconque des revendications précédentes, comprenant en outre le microscope (32).
